# EUROPEAN PATENT APPLICATION

(11) **EP 4 238 642 A1**
(43) Date of publication of application: **06.09.2023**
(21) Application number: 22290012.8
(22) Date of filing: 02.03.2022
(51) Int. Cl.: B01J 19/00, B01J 19/24, F16J 15/02, B01J 8/02

(54) **SEALING SYSTEM FOR A TUBULAR REACTOR**

(71) Applicant: Technip Energies France, 92741 Nanterre Cedex (FR)
(72) Inventor: Riegman, Jan-Jaap, 92741 Nanterre Cedex (FR); Mahmoudi Namarvar, Esmaeil, 92741 Nanterre Cedex (FR)
(74) Representative: McWilliams, David John

(57) **Abstract**

Sealing system for a tubular reactor 10 comprising an inner wall 11, comprising a main body 60 having a circular section 61 and comprising a peripheral wall 62 configured so that at least its upper part matches the inner wall 11 of the tubular reactor, said peripheral wall 62 comprising at least an annular lodging 22 comprising a sealing ring 50 sitting on an annular pusher 40, with the pusher 40 configured to push the sealing ring 50 in the peripheral wall 62 of the main body and the main body 60 having a sufficient weight to push the sealing ring 50 against the inner wall 11 of the tubular reactor 10.

## Description

The present invention relates to a sealing system for a tubular reactor, a particular a catalytic reactor and a method of loading said sealing system inside a tubular reactor.

The sealing system inserted in the tubular reactor prevents gas leakage between the inside and the outside of said tubular reactor.

The sealing system, which is the subject of the invention, relates to all uses for which sealing of a tubular reactor is sought in a wide temperature range which extends from cryogenic temperatures, passing through ambient, up to high temperature levels, which can reach and even exceed 1000°C.

One possible field of use of the invention is the catalytic steam reforming of hydrocarbons for the production of a hydrogen-rich gas. As process gas a mixture of steam, hydrocarbon and/or carbon dioxide is used. This gaseous mixture is fed at temperatures of about 400 DEG-600 DEG C. and pressures up to 4 MPa to a reaction chamber which may consist of a plurality of catalyst-filled tubes and is heated there to about 750 DEG to 800 DEG C. This gaseous mixture then reacts endothermically via the catalyst to form a hydrogen-rich gas containing portions of carbon monoxide, carbon dioxide and excess steam and hydrocarbon.

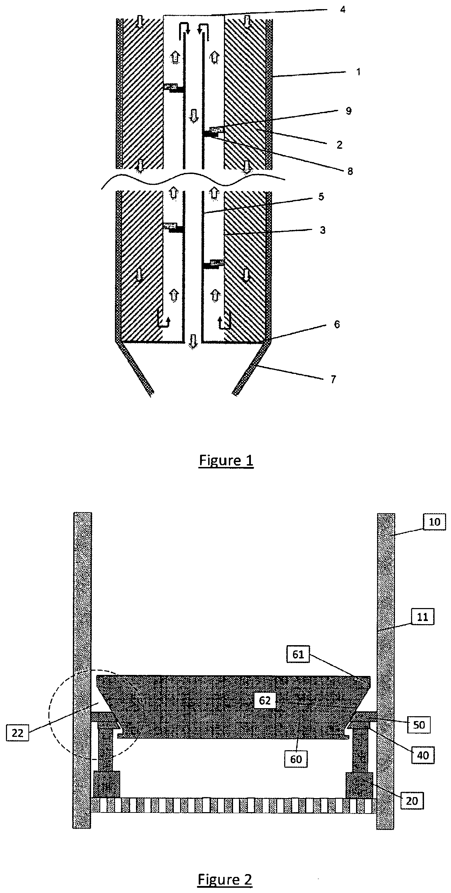

An example of catalyst tube is described in the document WO 2018/077969. This document describes a catalyst tube in a fired heater, which consists of an outer reactor tube 1, catalyst 2, an inner tube 5, a boundary between catalyst tube and inner tube 3 and inlet barrier 4, an outlet barrier 6 and an outlet reducer 7. This is shown in Figure 1. In this application it is important that the outlet barrier 6 creates an seal with the catalyst tube 1 to avoid hot gas from the catalyst outlet to escape to the outlet reducer and maximize the heat transfer in the boundary and inner tube.

Tubular reactors traditionally do not include the internal heat exchanger tubes as described in the above example (i.e. regenerative reactor). Revamping those conventional tubes that have been in use for some time with such regenerative reactor concept to improve the plant efficiency. In many cases this catalyst tube contains catalyst support grid at the bottom of the tube, which is a grid plate with holes in it. As a result, a simple conical sealing will not work. In case the grid plate can be removed, the conical surface of the outlet reducer in an existing tube is also not necessarily machined to achieve a perfectly matching conical surface with the seal and thus leakage of gas is likely.
Note these tubular reactors that have been in use for some time may also be subject to the following problems: weld shrinkage, weld protrusion as well as fabrication tolerances already present in new tubes as well as possible creep growth of the diameter of the tubular vessel. Therefore, the sealing device during installation shall be able to pass the minimum diameter taking into account these problems while it should still seal at the maximum diameter after creep growth.

The present invention aims to overcome these drawbacks and provide a new sealing system for tubular reactors.

A solution of the present invention is a sealing system for a tubular reactor 10 comprising an inner wall 11, comprising a main body 60 having a circular section 61 and comprising a peripheral wall 62 configured so that at least its upper part matches the inner wall of the tubular reactor, said peripheral wall 62 comprising at least an annular lodging 22 comprising a sealing ring 50 sitting on an annular pusher 40, with the pusher configured to push the sealing ring in the peripheral wall 62 of the main body 60 and the main body 60 having a sufficient weight to push the sealing ring 50 against the inner wall 11 of the tubular reactor 10.

In the sealing system according to the present invention, the sealing is made by the compression of the sealing ring between the annular pusher 40, the peripheral wall of the main body and the inner wall of the tubular reactor 10.

In the present invention, the expression "its upper part matches the inner wall of the tubular reactor" means that the space between the inner wall of the tubular reactor and the upper part of the peripheral wall of the main body is of between 0.5 and 5 mm. In fact, the space can be maximum slightly smaller (0.5 mm) than the minimum width of the sealing ring. And minimum space is a diameter of the peripheral wall of the main body 0.5mm smaller than the minimum reactor wall to allow installation of the sealing system. Advantageously, the sealing system can have a height of between 25 and 500mm, preferably between 25 and 100mm. The circular section of the main body can have a diameter of between 25mm and 500mm, preferably 100 and 150mm Note, the diameter of the circular section of the main body is slightly less than the inner diameter of the tubular reaction. For this reason, at least upper part of the peripheral wall of the main body matches the inner wall of the tubular reactor. Note that the height of the sealing system can be adjusted to seal at the most optimal location of the peripheral wall.

According to the present invention, the "sufficient weight of the main body" is a weight of between 10 and 10 000 kg, preferably between 100 and 500kg. The "sufficient weight" includes both static weight from the sealing system as well as the dynamic weight resulting from the differential pressure over the sealing system. Note that the higher the weight on the sealing system, the tighter the sealing will be.

The sealing ring may be formed in any suitable manner. However, it will generally be sufficiently compressible to accommodate the smallest diameter of the tubular reactor. The sealing ring will generally be a flexible seal. A compressible split ring or a ring having a high coefficient of expansion could be used. The sealing ring may be formed of any suitable material provided that it can withstand the reaction conditions. Typically, the sealing ring material can be selected from carbon steel, aluminum, stainless steel, high nickel alloys, other alloys, ceramics or any material able to withstand the deformation and reaction conditions.

The other elements of the sealing system may be formed of any suitable material. Such material will generally be selected to withstand the operating conditions of the reactor. Generally, these elements will be fabricated from carbon steel, aluminum, stainless steel, high nickel alloys, other alloys or any material able to withstand the deformation and reaction conditions.

Depending on the embodiment, the sealing system according to the present invention can comprise one or more of the following features:
- The sealing system comprises a base 20, preferably an annular base, configured to support at least the pusher 40 by connecting means 30. Advantageously, the base 20 can be adjusted to fit the surface where the sealing system rest on or means for keeping said sealing system in the tubular reactor 10.
- the connecting means 30 are chosen from among a cylinder or connecting rods.

Advantageously, the connecting means comprises some in-cuts to be inserted in the base 20.
- the height of connecting means 30 is such that it enables the axial movement of the main body 60 above the base 20. Advantageously, the height of connecting means can be extended to seal at the desired location in the tubular reactor.
- the lodging 22 comprises at least one smooth and straight top wall projected towards the inner wall 11 of the tubular reactor 10. Later this smooth and straight top wall of the lodging is called "inclined wall". Preferably, the inclined wall of the lodging 22 and the inner wall 11 of the tubular reactor 10 form an angle of between 5° and 45°
- the inner wall of the pusher 40 is noticeably parallel to the top wall of the lodging 22.

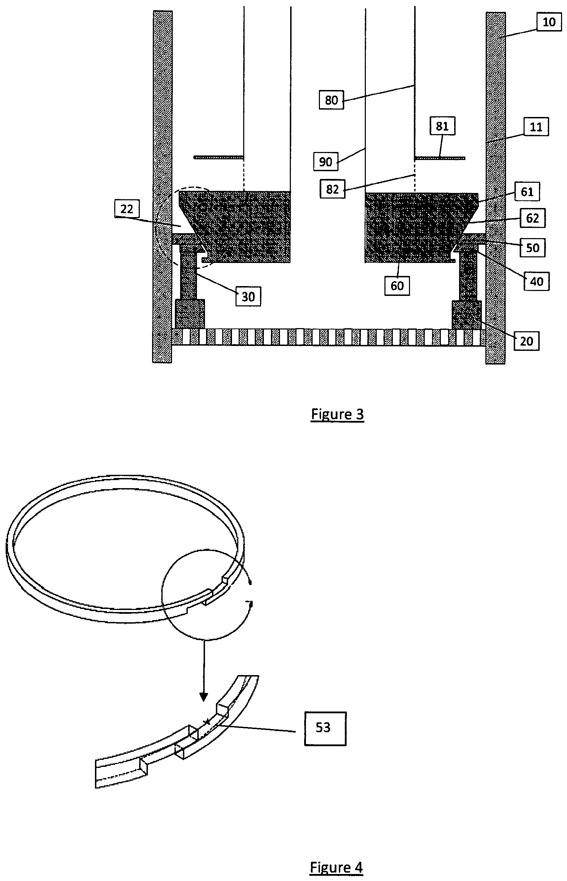

This configuration prevents the pusher colliding with the main body 60.
- the sealing ring 50 comprises a smooth inner wall configured for matching the top wall of the lodging 22.
- the peripheral wall 62 of the main body 60 comprises steps configured to lift at least the connecting means 30, the pusher 40 and the sealing ring 50 during loading and/or unloading the sealing system in the tubular reactor 10.
- the sealing ring 50 comprises a part divided longitudinally into two sub-parts configured to be superimposed one on the other or only overlap according to the compression exerted on the sealing ring. When the sub-parts are overlap, an overlapping gap 53 is observed in the sealing ring (cf. Fig 4). This overlapping gap 53 is configured to allow the compression to the minimum diameter required for the loading and/or the unloading of the sealing system in the tubular reactor. Typically, the overlapping gap has a corresponding between 0.5% and 5% of the length of the sealing ring.
- the pressure exerted by the main body 60 in the sealing system is of between 10kPa and 100 MPa, preferably between 100 kPa and 20 MPa.
- the main body 60 comprises a channel opening on both sides and configured to be connected to a tube 90 inside the reactor and/or a tube outside the reactor (cf. Fig 3). According to the present invention, the channel can be a gas passage, a gas conduct, a gas line or a lumen or similar. Preferably the channel is elongated.

An example of a sealing system according to the invention is shown figure 2. The sealing system, shown in Fig. 2, comprises a main body 60 comprising a peripheral wall an annular lodging 22 comprising a sealing ring 50 sitting on an annular pusher 40. Forces applied due to static and dynamic weight of the main body 60 push the sealing ring 50 against the inner wall 11 of the tubular reactor 10 to create a good seal. The base 20 can be adjusted (in diameter, thickness and shape of the edges) to fit the surface where the base 20 rest on. The base is connected to the cylinder 30 which acts as a connecting element with a pusher 40. The cylinder height shall be minimum sufficient to enable the axial movement of the main body 60 above the base 20 and can be extended to seal at the desired location. The pusher 40 is adjusted to push the sealing ring 50 in the main body 60, more specifically in the inclined wall of the lodging 22. The main body has steps 62 to lift the pusher 40 and cylinder 30 during loading and unloading the sealing system. In this example the main body does not comprise a channel opening on both sides and configured to be connected to a tube inside the reactor and/or a tube outside the reactor.

An example of a sealing system according to the invention, wherein the main body comprises a channel 63 opening on both sides and configured to be connected to a tube 90 inside the tubular reactor, is shown Figure 3. Indeed, this figure 3 shows the bottom of a tubular reactor, typically a catalyst reactor, comprising an inner tube 90 and the sealing system according to the invention.

According to one variant, the base 20, the pusher 40 and the connecting means 30 are made of one piece, or multiple pieces connected together.

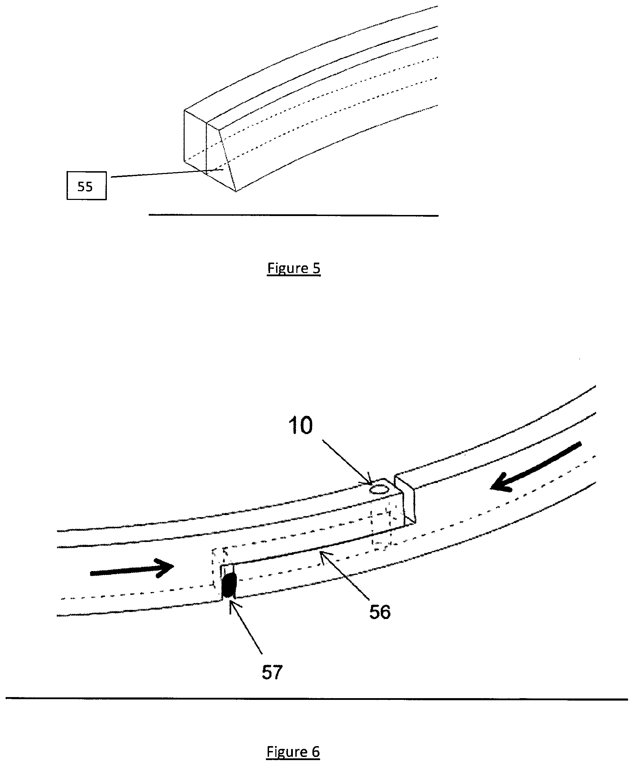

Advantageously, the annular lodging 22 comprises multiple concentrical sealing rings 50 and the pusher 40 is configured to push the concentrical sealing rings simultaneously. According to one variant, the annular lodging 22 comprises N concentrical sealing rings sitting on N concentrical annular separate pushers, with N comprised between 2 and 4. Note the concentrical sealing rings are contacted each another. Each sealing ring have a wall matching a wall of the sealing ring with which it is in contact. The inner most ring 55 comprises a smooth inner wall configured for matching the top wall of the lodging (cf. Fig. 5). The advantage of multiple concentrical rings in parallel is that an inner ring blocks the overlapping gap in the outer ring.

Another object of the present invention is a tubular reactor comprising a sealing system as defined in the present invention and means for keeping said sealing system at least one end of the tubular reactor, preferably in the bottom part of the tubular reactor.

Preferably, the tubular reactor according to the present invention is a vertical reactor with downflow. Reactant(s) flow downwardly through the tubular reactor and thus first contact the upper surface of the sealing system, more specifically the surface of the main body of the sealing system.

Advantageously, the tubular reactor can have a height of between 1 and 30m, preferably between 10 and 14m.

Advantageously, the tubular reactor can have a circular section having a diameter of between 25 and 500mm, preferably between 100 and 150mm.

Advantageously, the sealing system can be installed up to 1000mm, preferably to 150mm away from the outlet of the tubular reactor.

Advantageously, the tubular reactor according to the present invention is a tubular reactor for catalytic conversion of a process gas, in other words the tubular reactor is a catalyst tube.

According to a more preferential variant, said tubular reactor is a reactor for catalytic conversion of process gas and comprises:
- an outer reactor tube 10;
- an inner tube 90 that extends coaxially inside the outer reactor tube 10;
- a boundary 80 located between the inner wall of the outer reactor tube 10 and the outer wall of the inner tube 90;
- a passageway 82 through the boundary at the bottom of the tube close to the sealing. The passageway can be a perforated tube, large annular holes or a support structure boundary tube.
- a first annular channel for catalytically converting process gas, which channel is defined by the inner wall of the outer reactor tube 10 and the outer wall of the boundary, which channel is loaded with catalyst material;
- a second annular channel for process gas to flow countercurrently or co-currently to the process gas flowing through the first annular channel, which second annular channel is defined by the inner wall of the boundary and the outer wall of the inner tube;
- an inlet barrier at the inlet end of the catalyst tube for preventing process gas to exit the outer reactor tube from the second annular channel and inner tube at the inlet end of the catalyst tube;
- an outlet barrier at the outlet end of the catalyst tube for preventing process gas to exit the outer reactor tube from the first annular channel and from one of the second annular channel and the inner tube 90, while allowing process gas to exit the outer reactor tube from the other of the second annular channel and the inner tube 90; and
- a sealing system as defined in the present invention and kept on the outlet barrier, and wherein the main body comprises a channel opening on both sides connected to the inner tube.

The catalyst in the outer annulus can be supported on the main body 60 of the sealing system or a bottom catalyst support 81.

In other words, the sealing system according to the invention can be added to the catalyst tubular reactor as described in the document WO 2018/077969.
Preferably, the catalyst is used to conduct catalyst conversion reaction, preferably to revamp a reformer.

As explained above an example of catalyst tube according to the present invention is shown Figure 3.

Finally, another object of the present invention is a method of loading a sealing system according to the present invention inside a tubular reactor comprising a compression step of the sealing ring before loading and a decompression step of the sealing system after loading.

Advantageously, the sealing ring comprises a part divided longitudinally into two sub-parts, an upper sub-part and a lower sub-part, configured to be superimposed one on the other or only overlap according to the compression exerted on the sealing ring and the compression step implements one of the following compressions means:
- A tape or band around the sealing ring;
- A pin 100 inserted vertically, full through upper sub-part of the sealing ring, but half way in lower sub-part of the sealing ring;
- Glue applied at surface between two sub-parts 56 and/or at both ends of these sub-parts;
- Soldering of one or both ends of the sub-parts of the sealing ring 57.

These different compressions means are represented figure 6. And either single means of compression or a combination can be applied.

Note the insertion of the pin half way in lower sub-part of the sealing ring avoids leakage when the pin is dissolved at high temperature.

In compressed state the sealing is minimal and to ensure optimum sealing, the mean of compression shall be removed/disconnected before reaching operating conditions.

In all these cases, means can be decomposing at temperature lower than normal operating temperature, but is strong enough at room temperature to maintain the ring in compressed state during loading. Typically, the decomposing temperature is between 100 and 500 and operating temperature is between 600 and 800 °C. Alternatively, these materials can be dissolving in the operating fluid. Another alternative is that the material collapses/breaks under the weight and or pressure difference along the seal, allowing the ring to expand freely.

Typically, the tape or band material can be selected from plastic, paper, ceramics or metal

Typically, the pin material can be selected from plastic or metal

Typically, the glue material can be selected from epoxy glues, isocyanate glues or other single or multiple components glues.

Typically, the material for soldering can be selected from brazing material with a melting point at least 100 °C below operating temperature.

Alternatively, a temporary thin band or tube can be installed around the compressed sealing ring this is removed after installation.

In case the sealing system would have to be removed after a certain time in operation, the main body can be pulled (either by a tube or a lug connected to the main body) to release the force on the sealing ring. Subsequently the sealing ring will be released, and the complete sealing system can be removed from the tube.

The different objects of the present invention have several advantages.

Firstly, a major advantage of the invention is that the sealing system can handle changes in diameter of the tubular reactor. In general, when ring type seals are applied the tolerances on the tube inside diameter and the ring dimensions required very tight tolerances (<0.1mm). The sealing design in the invention can handle significantly larger tolerances (typically up to several mm) as the weight and/or pressure drop of the main body enables the pusher to push the sealing rings upwards. The inclined wall of the lodging of the peripheral wall of the main body where the sealing ring slides on will expand the diameter of the ring and thereby ensuring that there is a tight seal between the inner wall of the tubular reactor and the main body in all scenarios. This benefit is especially beneficial in case of applications in tubular reactors that have been used in operation as the tolerances might not have been optimized for the sealing. Additionally in high temperature application creep of the materials is a known phenomenon. As a result of creep, the diameter of a tubular reactor can increase slightly over time. The weight energized sealing design ensures that the sealing ring is always in a tight fit between the tubular reactor and the main body throughout the tube lifetime. The sealing will this not reduce during the lifetime of the tubular reactor.

Secondly, because the sealing ring is pushed tightly against the inner wall of the tubular reactor by the main body and by the weight of the sealing system, the required pretension in the sealing ring is of less importance. This is especially important for high temperature applications where the material strength reduces. The present invention therefore decreases the leakage past the sealing system. The sealing ring is designed such that the reactor tubular diameter between nominal size minus up to 4mm and nominal size plus up to 4mm deviation is covered.

Thirdly, the present invention allows for applying a seal in applications where the sealing is placed on top of some existing structure, which does not have to be straight. The base can be adjusted to the surface where it is supported on. The actual sealing between the tube and the housing is than achieve a slightly higher elevation where there is no obstruction. This can be especially useful in case of welds applied in the bottom of the tubular reactor.

The solution of the present invention is especially beneficial in case of installation on the bottom of a tube as the gravity will ensure sufficient load on the sealing device to ensure the tightness of the sealing ring 50. However, the sealing can also be applied in horizontal position, at the top of the tube or at an inclination. In those cases, it might be required to apply an additional static load on the sealing.

## Claims

1. Sealing system for a tubular reactor (10) comprising an inner wall (11), comprising a main body (60) having a circular section (61) and comprising a peripheral wall (62) configured so that at least its upper part matches the inner wall (11) of the tubular reactor, said peripheral wall (62) comprising at least an annular lodging (22) comprising a sealing ring (50) sitting on an annular pusher (40), with the pusher (40) configured to push the sealing ring (50) in the peripheral wall (62) of the main body and the main body (60) having a sufficient weight to push the sealing ring (50) against the inner wall (11) of the tubular reactor (10).

2. Sealing system according to claim 1, comprises a base (20) configured to support at least the pusher (40) by connecting means (30).

3. Sealing system according to claim 2, wherein the connecting means (30) are chosen from among a cylinder or connecting rods.

4. Sealing system according to claim 2 or claim 3, wherein the height of connecting means (30) is such that it enables the axial movement of the main body (60) above the base (20).

5. Sealing system according to any one of claims 1 to 4, wherein the lodging (22) comprises at least one smooth and straight top wall projected towards the inner wall (11) of the tubular reactor (10).

6. Sealing system according to any one of claims 1 to 5, wherein the inner wall of the pusher (40) is noticeably parallel to the top wall of the lodging (22).

7. Sealing system according to any one of claims 1 to 6, wherein the sealing ring (50) comprises a smooth inner wall configured for matching the top wall of the lodging (22).

8. Sealing system according to any one of claims 1 to 7, wherein the peripheral wall (62) of the main body (60) comprises steps configured to lift at least the connecting means (30), the pusher (40) and the sealing ring (50) during loading and/or unloading the sealing system in the tubular reactor.

9. Sealing system according to any one of claims 1 to 8, wherein the sealing ring (50) comprises a part divided longitudinally into two sub-parts configured to be superimposed one on the other or only overlap according to the compression exerted on the sealing ring.

10. Sealing system according to any one of claims 1 to 9, wherein the main body (60) comprises a channel opening on both sides and configured to be connected to a tube (90) inside the reactor or a tube outside the reactor.

11. Tubular reactor comprising a sealing system as defined in any one of claims 1 to 10 and means for keeping said sealing system at least one end of the tubular reactor.

12. Tubular reactor according to claim 11, wherein said tubular reactor is a reactor for catalytic conversion of process gas and comprises:
- an outer reactor tube (10);
- an inner tube (90) that extends coaxially inside the outer reactor tube (10);
- a boundary (80) located between the inner wall of the outer reactor tube (10) and the outer wall of the inner tube (90);
- a passageway (82) through the boundary at the bottom of the tube close to the sealing.
- a first annular channel for catalytically converting process gas, which channel is defined by the inner wall of the outer reactor tube 10 and the outer wall of the boundary, which channel is loaded with catalyst material;
- a second annular channel for process gas to flow countercurrently or co-currently to the process gas flowing through the first annular channel, which second annular channel is defined by the inner wall of the boundary and the outer wall of the inner tube;
- an inlet barrier at the inlet end of the catalyst tube for preventing process gas to exit the outer reactor tube from the second annular channel and inner tube at the inlet end of the catalyst tube;
- an outlet barrier at the outlet end of the catalyst tube for preventing process gas to exit the outer reactor tube from the first annular channel and from one of the second annular channel and the inner tube (90), while allowing process gas to exit the outer reactor tube from the other of the second annular channel and the inner tube (90); and
- a sealing system as defined in claim 10 and kept on the outlet barrier, and wherein the main body comprises a channel opening on both sides connected to the inner tube.

13. Use of a tubular reactor according to claim 12 to conduct catalyst conversion reaction, preferably to revamp a reformer.

14. Method of loading a sealing system as defined in any one of claims 1 to 10 inside a tubular reactor comprising a compression step of the sealing ring before loading and a decompression step of the sealing system after loading.

15. Method of loading according to claim 14, wherein the sealing ring comprises a part divided longitudinally into two sub-parts, an upper sub-part and a lower sub-part, configured to be superimposed one on the other or only overlap according to the compression exerted on the sealing ring and the compression step implements one of the following compressions means:
- A tape or band around the sealing ring;
- A pin (100) inserted vertically, full through upper sub-part of the sealing ring, but half way in lower sub-part of the sealing ring;
- Glue applied at surface between two sub-parts (56) and/or at both ends of these sub-parts;
- Soldering of one or both ends of the sub-parts of the sealing ring (57).
